# EUROPÄISCHE PATENTANMELDUNG

(11) **EP 4 725 579 A1**
(43) Veröffentlichungstag der Anmeldung: **15.04.2026**
(21) Anmeldenummer: 24205423.7
(22) Anmeldetag: 08.10.2024
(51) Int. Cl.: B01D 29/56, B01D 35/147, B01D 35/153

(54) **FILTERANORDNUNG ZUR REINIGUNG VON HYDRAULIKÖL**

(71) Anmelder: Deere & Company, Moline, IL 61265 (US)
(72) Erfinder: BILLICH, MANUEL, 68163 Mannheim (DE); MEID, MICHAEL, 68163 Mannheim (DE)
(74) Vertreter: Dehnhardt, Florian Christopher

(57) **Zusammenfassung**

Die Erfindung betrifft eine Filteranordnung (10) zur Reinigung von Hydrauliköl, umfassend einen Einlass (14) zur Zufuhr von unter Druck stehendem Hydrauliköl, ein mit dem Einlass (14) verbundenes Filterelement (22) zur Reinigung des zugeführten Hydrauliköls, einen Auslass (24) zur Bereitstellung des gereinigten Hydrauliköls über eine mit dem Auslass (24) unmittelbar verbundene erste Versorgungsleitung (26) zum Betrieb einer ersten hydraulischen Verbrauchergruppe (28), sowie ein mit dem Einlass (14) verbundenes Druckbegrenzungsventil (30), das ausgangsseitig unmittelbar mit einer zweiten Versorgungsleitung (32) zum Betrieb einer zweiten hydraulischen Verbrauchergruppe (34) verbunden ist, wobei die beiden Versorgungsleitungen (26, 32) über ein Drosselelement (36) miteinander kommunizieren.

## Beschreibung

Die Erfindung betrifft eine Filteranordnung zur Reinigung von Hydrauliköl.

Um mögliche Beeinträchtigungen von Funktion und Lebensdauer auszuschließen, werden hydraulische Verbraucher in land- und forstwirtschaftlichen Fahrzeugen wie auch Baufahrzeugen mit gefiltertem Hydrauliköl betrieben. Hierzu ist ein im Hydraulikölstrom liegendes Filterelement vorgesehen, das sich zwischen einer druckerzeugenden Hydraulikpumpe und den zu versorgenden hydraulischen Verbrauchern befindet. Das Filterelement umfasst in der Regel einen in einem Filtergehäuse untergebrachten und als austauschbare Patrone ausgebildeten Filtereinsatz, der eine plissierte Papiermembran als filteraktives Element enthält. Im Laufe der Zeit setzen sich die Poren der Papiermembran zu, sodass der am Filterelement zwischen einem Ein- und Auslass abfallende Differenzdruck sukzessive ansteigt. Gleiches gilt für den Fall, dass die Viskosität des Hydrauliköls temperaturbedingt erhöht ist (beispielsweise bei einem Kaltstart bei winterlichen Außentemperaturen). Unter solchen Umständen überbrückt ein Druckbegrenzungsventil das Filterelement noch vor Erreichen eines kritischen Differenzdrucks, um einer Zerstörung der Filterpatrone sowie einer damit einhergehenden Freisetzung der in der Papiermembran zurückgehaltenen Partikel vorzubeugen. Im Falle der Überbrückung des Filterelements gelangt indes ungereinigtes Hydrauliköl in das nachfolgende Hydrauliksystem. Dies ist allenfalls für einen begrenzten Zeitraum zu tolerieren und hängt zudem von den Reinheitsanforderungen der betroffenen hydraulischen Verbraucher ab. Je nach Art der hydraulischen Verbraucher können insofern erhebliche Unterschiede bestehen.

Aufgabe der vorliegenden Erfindung ist es daher, eine Filteranordnung der eingangs angegebenen Art dahingehend weiterzubilden, dass unterschiedlichen Reinheitsanforderungen von damit betriebenen hydraulischen Verbrauchern Rechnung getragen wird.

Diese Aufgabe wird durch eine Filteranordnung zur Reinigung von Hydrauliköl mit den Merkmalen des Patentanspruchs 1 gelöst.

Die erfindungsgemäße Filteranordnung zur Reinigung von Hydrauliköl umfasst einen Einlass zur Zufuhr von unter Druck stehendem Hydrauliköl, ein mit dem Einlass verbundenes Filterelement zur Reinigung des zugeführten Hydrauliköls, einen Auslass zur Bereitstellung des gereinigten Hydrauliköls über eine mit dem Auslass unmittelbar verbundene erste Versorgungsleitung zum Betrieb einer ersten hydraulischen Verbrauchergruppe, sowie ein mit dem Einlass verbundenes Druckbegrenzungsventil, das ausgangsseitig unmittelbar mit einer zweiten Versorgungsleitung zum Betrieb einer zweiten hydraulischen Verbrauchergruppe verbunden ist, wobei die beiden Versorgungsleitungen über ein Drosselelement miteinander kommunizieren.

Die Filteranordnung ist insbesondere Bestandteil eines Hydrauliksystems eines land- oder forstwirtschaftlichen Fahrzeugs bzw. eines Baufahrzeugs und über ihren Einlass an einem Förderausgang einer Hydraulikpumpe angeschlossen, um einen von der Hydraulikpumpe kommenden Hydraulikvolumenstrom von unerwünschten Partikeln in Form von Abrieb, von außen eingebrachten Verunreinigungen und dergleichen, zu befreien.

Je nach Betätigungszustand des Druckbegrenzungsventils weist die Filteranordnung nun zwei unterschiedliche Betriebsmodi auf. In einem Normalbetriebsmodus ist das Druckbegrenzungsventil unbetätigt und nimmt eine gesperrte Ventilstellung sein. Der gesamte von der Hydraulikpumpe kommende Hydraulikvolumenstrom tritt in diesem Fall durch das Filterelement hindurch und verteilt sich anschließend über die beiden Versorgungsleitungen auf die beiden hydraulischen Verbrauchergruppen. Hierbei tritt über das Drosselelement ein gewisser Druckabfall auf, der sich jedoch durch entsprechende Vorgabe des Drosselwiderstands auf ein für den Betrieb der zweiten hydraulischen Verbrauchergruppe akzeptables Maß begrenzen lässt.

Im Falle eines als Traktor ausgebildeten landwirtschaftlichen Fahrzeugs betrifft die erste hydraulische Verbrauchergruppe eine Getriebeschmierung bzw. -steuerung, die zweite hydraulische Verbrauchergruppe sonstige hydraulische Betriebseinrichtungen, wie beispielsweise eine Haupthydraulikpumpe, hydraulische Steuergeräte, Druckregelventile, Druckbegrenzungsventile, hydraulische Federungssysteme, bestehend aus hydraulischen Zylindern und Dämpfungsventilen, oder dergleichen. In einem solchen Fall weist die erste hydraulische Verbrauchergruppe gegenüber der zweiten hydraulischen Verbrauchergruppe im Allgemeinen höhere Reinheitsanforderungen hinsichtlich des zugeführten Hydrauliköls auf.

Steigt der über das Filterelement abfallende Hydraulikdruck an, sei es, weil sich dieses unter Zunahme des Strömungswiderstands mit der Zeit mit abgeschiedenen Partikeln zusetzt und/oder aufgrund einer temperaturbedingten Erhöhung der Viskosität des Hydrauliköls, so wird das Druckbegrenzungsventil bei Erreichen einer vorgegebenen Schaltschwelle, die entsprechend eines für das betreffende Filterelement zulässigen Differenzdrucks vorgegeben ist, unter Überbrückung des Filterelements dahingehend betätigt, dass dieses eine durchlässige Ventilstellung einnimmt. In diesem Intermediärbetriebsmodus tritt ein Großteil des über den Einlass zugeführten Hydraulikvolumenstroms durch das Druckbegrenzungsventil hindurch, der demgegenüber geringere Teil nimmt weiterhin den Weg durch das Filterelement. Auf diese Weise wird eine Grundversorgung der verschmutzungsempfindlichen ersten hydraulischen Verbrauchergruppe mit gefiltertem Hydrauliköl über die erste Versorgungsleitung aufrechterhalten, wobei das Drosselelement einen Übertritt von ungefiltertem Hydrauliköl aus der zweiten Versorgungsleitung weitgehend unterbindet. Die Versorgung der demgegenüber weniger verschmutzungsempfindlichen zweiten hydraulischen Verbrauchergruppe erfolgt indes uneingeschränkt über die unmittelbar mit dem Druckbegrenzungsventil ausgangsseitig verbundene zweite Versorgungsleitung. Dies ermöglicht eine zumindest vorübergehende Aufrechterhaltung des Betriebs der von den Verbrauchergruppen umfassten hydraulischen Betriebseinrichtungen, beispielsweise bis zum Austausch eines von dem Filterelement umfassten Filtereinsatzes, oder aber bis zu einer betriebsbedingten Erwärmung des Hydrauliköls, die dazu führt, dass die Viskosität und damit der über das Filterelement abfallende Differenzdruck soweit abnimmt, dass das Druckbegrenzungsventil selbsttätig in die gesperrte Ventilstellung und damit in den Normalbetriebsmodus zurückkehrt.

Mit anderen Worten weist die Filteranordnung mehrere Versorgungsanschlüsse auf, von denen jeder einer unterschiedlichen Reinheitsanforderung einer daran zu betreibenden hydraulischen Verbrauchergruppe gerecht wird.

Bevorzugte Weiterbildungen der erfindungsgemäßen Filteranordnung gehen aus den Unteransprüchen hervor.

Zunächst besteht die Möglichkeit, dass das Drosselelement zugleich ein weiteres Filterelement bildet. Hierzu kann das Drosselelement ein Filtersieb umfassen, das im Intermediärbetriebsmodus ein Übertreten zumindest gröberer Partikel von der zweiten in die erste Versorgungsleitung unterbindet. Im Normalbetriebsmodus wird das Filtersieb aufgrund der Richtungsumkehr des hindurchtretenden Hydraulikvolumenstroms wieder freigespült.

Vorzugsweise ist das Drosselelement zumindest zweigeteilt aufgebaut, wobei ein Mittenabgriff in eine weitere Versorgungsleitung zum Betrieb einer weiteren hydraulischen Verbrauchergruppe mündet. So können zwei separate Drosselelemente vorgesehen sein, die zwischen der ersten und zweiten Versorgungsleitung in Reihe geschaltet sind. Der Mittenabgriff befindet sich als in die weitere Versorgungsleitung mündende Abzweigung zwischen den beiden Drosselelementen. Dieser Ansatz lässt sich auf eine beliebige (darüber hinausgehende) Anzahl von Drosselelementen erweitern. Hierbei nimmt die Reinheit des bereitgestellten Hydrauliköls im Intermediärbetriebsmodus ausgehend von der ersten über die weitere(n) bis hin zur zweiten Versorgungsleitung sukzessive zu.

Die Betätigung des Druckbegrenzungsventils erfolgt in der Regel rein hydraulisch, hierzu kann dieses direktgesteuert ausgebildet sein und nach Maßgabe eines zwischen Ein- und Ausgangsseite auftretenden Hydraulikdruckgefälles entgegen einer rückstellenden Federkraft in die durchlässige Ventilstellung verbracht werden.

Um einen Rückfluss von Hydrauliköl in Richtung des Filterelements sowie ein damit verbundenes Rückspülen darin zurückgehaltener Partikel auszuschließen, besteht die Möglichkeit, dem Auslass das aus dem Filterelement austretende gereinigte Hydrauliköl über ein Einwegventil zuzuführen. Bei dem Einwegventil handelt es sich um ein herkömmliches Membran- oder Kugelrückschlagventil.

Des Weiteren ist es denkbar, dass die Filteranordnung baulich in einen Filterkopf mit einem abnehmbaren Filtergehäuse zur Aufnahme des als austauschbarer Filtereinsatz ausgebildeten Filterelements integriert ist. Die vom Druckbegrenzungsventil bzw. Einwegventil umfassten Ventilsitze wie auch das Drosselelement (bzw. die Drosselelemente) selbst können dabei unmittelbar in einem Gehäusekörper des Filterkopfs ausgeformt sein. Der Einlass wie auch die Versorgungsleitungen führen zu jeweils zugehörigen Versorgungsanschlüssen, die in Form von genormten Gewindebohrungen an einer Außenseite des Filterkopfs angeordnet sind.

Die erfindungsgemäße Filteranordnung zur Reinigung von Hydrauliköl wird im Folgenden anhand der beigefügten Zeichnungen näher erläutert. Dabei sind übereinstimmende bzw. hinsichtlich ihrer Funktion vergleichbare Komponenten mit denselben Bezugszeichen gekennzeichnet. Es zeigen:
- Fig. 1: eine schematische Darstellung eines ersten Ausführungsbeispiels der erfindungsgemäßen Filteranordnung zur Reinigung von Hydrauliköl,
- Fig. 2: eine schematische Darstellung eines zweiten Ausführungsbeispiels der erfindungsgemäßen Filteranordnung zur Reinigung von Hydrauliköl, und
- Fig. 3: eine in einen Filterkopf integrierte Bauform der erfindungsgemäßen Filteranordnung, mit einem abnehmbaren Filtergehäuse zur Aufnahme eines austauschbaren Filtereinsatzes.

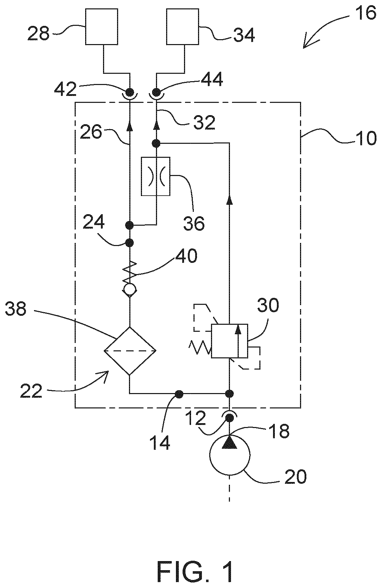

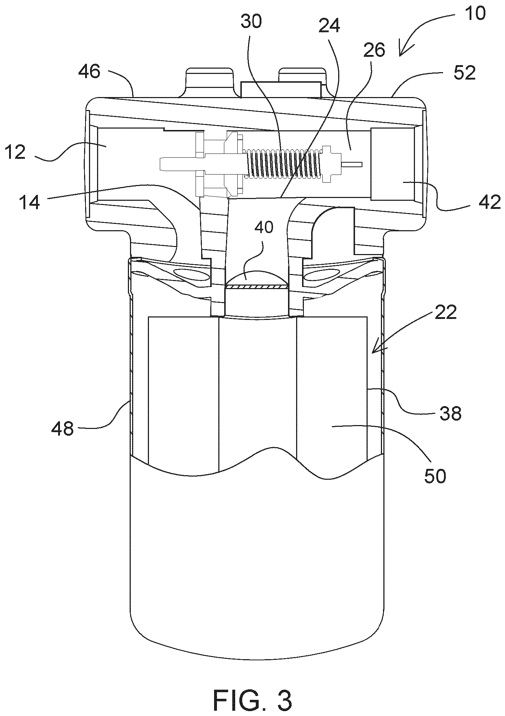

Fig. 1 zeigt eine schematische Darstellung eines ersten Ausführungsbeispiels der erfindungsgemäßen Filteranordnung 10 zur Reinigung von Hydrauliköl, wobei diese unter Bezugnahme auf die in Fig. 3 beispielhaft dargestellte Bauform beschrieben werden soll.

Demgemäß umfasst die Filteranordnung 10 einen mit einem eingangsseitigen Versorgungsanschluss 12 kommunizierenden Einlass 14 zur Zufuhr von unter Druck stehendem Hydrauliköl. Die Filteranordnung 10 ist vorliegend Bestandteil eines Hydrauliksystems 16 eines land- oder forstwirtschaftlichen Fahrzeugs (nicht gezeigt) und über ihren Einlass 14 an einem Förderausgang 18 einer Hydraulikpumpe 20 angeschlossen, um einen von der Hydraulikpumpe 20 kommenden Hydraulikvolumenstrom von unerwünschten Partikeln in Form von Abrieb, von außen eingebrachten Verunreinigungen und dergleichen, zu befreien.

Die eigentliche Reinigung des zugeführten Hydrauliköls erfolgt mittels eines mit dem Einlass 14 verbundenen Filterelements 22, wobei das gereinigte Hydrauliköl über einen Auslass 24 einer unmittelbar damit verbundenen ersten Versorgungsleitung 26 zum Betrieb einer ersten hydraulischen Verbrauchergruppe 28 bereitgestellt wird.

Ein mit dem Einlass 14 verbundenes Druckbegrenzungsventil 30 ist ausgangsseitig unmittelbar mit einer zweiten Versorgungsleitung 32 zum Betrieb einer zweiten hydraulischen Verbrauchergruppe 34 verbunden, wobei die beiden Versorgungsleitungen 26, 32 über ein Drosselelement 36 miteinander kommunizieren.

Je nach Betätigungszustand des Druckbegrenzungsventils 30 weist die Filteranordnung 10 nun zwei unterschiedliche Betriebsmodi auf.

In einem Normalbetriebsmodus ist das Druckbegrenzungsventil 30 unbetätigt und nimmt eine gesperrte Ventilstellung ein (entsprechend der Darstellung in Fig. 1). Der gesamte Hydraulikvolumenstrom tritt dann durch das Filterelement 22 hindurch und verteilt sich anschließend über die beiden Versorgungsleitungen 26, 32 auf die beiden hydraulischen Verbrauchergruppen 28, 34. Hierbei tritt über das Drosselelement 36 ein gewisser Druckabfall auf. Dieser wird durch entsprechende Vorgabe des Drosselwiderstands auf ein für den Betrieb der zweiten hydraulischen Verbrauchergruppe 34 akzeptables Maß begrenzt.

Im Falle eines als Traktor ausgebildeten landwirtschaftlichen Fahrzeugs betrifft die erste hydraulische Verbrauchergruppe 28 eine Getriebeschmierung bzw. -steuerung, die zweite hydraulische Verbrauchergruppe 34 sonstige hydraulische Betriebseinrichtungen, wie beispielsweise eine Haupthydraulikpumpe, hydraulische Steuergeräte, Druckregelventile, Druckbegrenzungsventile, hydraulische Federungssysteme, bestehend aus hydraulischen Zylindern und Dämpfungsventilen, oder dergleichen. In einem solchen Fall weist die erste hydraulische Verbrauchergruppe 28 gegenüber der zweiten hydraulischen Verbrauchergruppe 34 im Allgemeinen höhere Reinheitsanforderungen hinsichtlich des zugeführten Hydrauliköls auf.

Steigt der über das Filterelement 22 abfallende Hydraulikdruck an, sei es, weil sich dieses unter Zunahme des Strömungswiderstands mit der Zeit mit abgeschiedenen Partikeln zusetzt und/oder aufgrund einer temperaturbedingten Erhöhung der Viskosität des Hydrauliköls, so wird das Druckbegrenzungsventil 30 bei Erreichen einer vorgegebenen Schaltschwelle, die entsprechend eines für das betreffende Filterelement 22 zulässigen Differenzdrucks vorgegeben ist, unter Überbrückung des Filterelements 22 dahingehend betätigt, dass dieses eine durchlässige Ventilstellung einnimmt. In diesem Intermediärbetriebsmodus tritt ein Großteil des über den Einlass 14 zugeführten Hydraulikvolumenstroms durch das Druckbegrenzungsventil 30 hindurch, der demgegenüber geringere Teil nimmt weiterhin den Weg durch das Filterelement 22. Damit wird eine Grundversorgung der verschmutzungsempfindlichen ersten hydraulischen Verbrauchergruppe 28 mit gefiltertem Hydrauliköl über die erste Versorgungsleitung 26 aufrechterhalten, wobei das Drosselelement 36 einen Übertritt von ungefiltertem Hydrauliköl aus der zweiten Versorgungsleitung 32 weitgehend unterbindet. Die Versorgung der demgegenüber weniger verschmutzungsempfindlichen zweiten hydraulischen Verbrauchergruppe 34 erfolgt indes uneingeschränkt über die unmittelbar mit dem Druckbegrenzungsventil 30 ausgangsseitig verbundene zweite Versorgungsleitung 32. Dies ermöglicht eine zumindest vorübergehende Aufrechterhaltung des Betriebs der von den Verbrauchergruppen 28, 34 umfassten hydraulischen Betriebseinrichtungen, beispielsweise bis zum Austausch eines von dem Filterelement 22 umfassten Filtereinsatzes 38, oder aber bis zu einer betriebsbedingten Erwärmung des Hydrauliköls, die dazu führt, dass die Viskosität und damit der über das Filterelement 22 abfallende Differenzdruck soweit abnimmt, dass das Druckbegrenzungsventil 30 selbsttätig in die gesperrte Ventilstellung und damit in den Normalbetriebsmodus zurückkehrt.

In einer optionalen Ausgestaltung der Filteranordnung 10 bildet das Drosselelement 36 zugleich ein weiteres Filterelement. Hierzu umfasst das Drosselelement 36 ein Filtersieb, das im Intermediärbetriebsmodus ein Übertreten zumindest gröberer Partikel von der zweiten Versorgungsleitung 32 in die erste Versorgungsleitung 26 unterbindet. Im Normalbetriebsmodus wird das Filtersieb aufgrund der Richtungsumkehr des hindurchtretenden Hydraulikvolumenstroms wieder freigespült.

Die Betätigung des Druckbegrenzungsventils 30 erfolgt rein hydraulisch, wobei dieses direktgesteuert ausgebildet ist und nach Maßgabe eines zwischen Ein- und Ausgangsseite auftretenden Hydraulikdruckgefälles entgegen einer rückstellenden Federkraft in die durchlässige Ventilstellung verbracht wird.

Um einen Rückfluss von Hydrauliköl in Richtung des Filterelements 22 sowie ein damit verbundenes Rückspülen darin zurückgehaltener Partikel auszuschließen, wird dem Auslass 24 das aus dem Filterelement 22 austretende gereinigte Hydrauliköl über ein Einwegventil 40 zugeführt. Bei dem Einwegventil 40 handelt es sich um ein herkömmliches Membran- oder Kugelrückschlagventil.

Mit anderen Worten führen die Versorgungsleitungen 26, 32 zu mehreren bzw. jeweils zugehörigen ausgangsseitigen Versorgungsanschlüssen 42, 44 an der Filteranordnung 10, von denen jeder einer unterschiedlichen Reinheitsanforderung einer daran zu betreibenden hydraulischen Verbrauchergruppe 28, 34 gerecht wird.

Entsprechend der in Fig. 3 wiedergegebenen beispielhaften Bauform ist die Filteranordnung 10 baulich in einen Filterkopf 46 mit einem abnehmbaren Filtergehäuse 48 zur Aufnahme des Filtereinsatzes 38 integriert, wobei der Filtereinsatz 38 eine plissierte Papiermembran 50 als filteraktives Element enthält. Die vom Druckbegrenzungsventil 30 bzw. Einwegventil 40 umfassten Ventilsitze wie auch das Drosselelement 36 selbst sind unmittelbar in einem Gehäusekörper 52 des Filterkopfs 46 ausgeformt. Der Gehäusekörper 52 besteht beispielsweise aus Aluminium- oder Zinkdruckguss. Das Drosselelement 36 kann darin als Gusskanal ausgebildet sein.

Wie ferner in Fig. 3 zu erkennen ist, sind die ein- und ausgangsseitigen Versorgungsanschlüsse 12, 42, 44 (der ausgangsseitige Versorgungsanschluss 44 ist in der gewählten Schnittdarstellung nicht sichtbar) in Form von genormten Gewindebohrungen an einer Außenseite des Filterkopfs 46 angeordnet. Hierbei ist anzumerken, dass aus Gründen der Übersichtlichkeit in Fig. 3 nicht sämtliche Bestandteile der Filteranordnung 10 dargestellt sind.

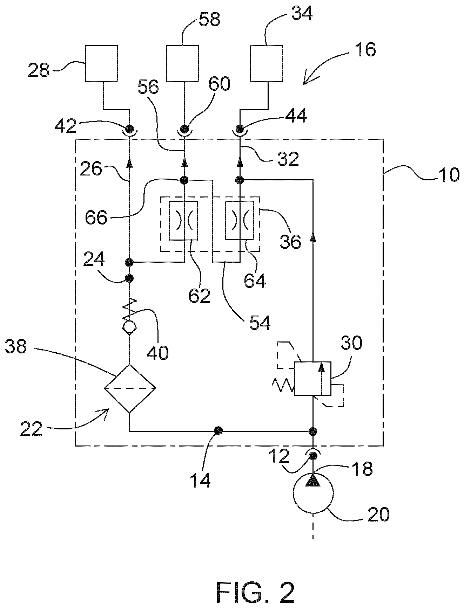

Fig. 2 zeigt ein zweites Ausführungsbeispiel der erfindungsgemäßen Filteranordnung 10. Dieses unterscheidet sich von dem in Fig. 1 wiedergegebenen ersten Ausführungsbeispiel dahingehend, dass das Drosselelement 36 zweigeteilt aufgebaut ist, wobei ein Mittenabgriff 54 in eine weitere Versorgungsleitung 56 zum Betrieb einer weiteren hydraulischen Verbrauchergruppe 58 an einem weiteren Versorgungsanschluss 60 mündet. Genauer gesagt erfolgt eine funktionelle bzw. bauliche Auftrennung in zwei separate Drosselelemente 62, 64, die zwischen der ersten und zweiten Versorgungsleitung 26, 32 in Reihe geschaltet sind. Der Mittenabgriff 54 befindet sich als in die weitere Versorgungsleitung 56 mündende Abzweigung 66 zwischen den beiden Drosselelementen 62, 64.

Dieser Ansatz lässt sich auf eine beliebige (darüber hinausgehende) Anzahl von Drosselelementen erweitern. Hierbei nimmt die Reinheit des bereitgestelltem Hydrauliköls im Intermediärbetriebsmodus ausgehend von der ersten Versorgungsleitung 26 über die weitere(n) Versorgungsleitungen bis hin zur zweiten Versorgungsleitung 32 sukzessive zu.

## Patentansprüche

1. Filteranordnung zur Reinigung von Hydrauliköl, umfassend einen Einlass (14) zur Zufuhr von unter Druck stehendem Hydrauliköl, ein mit dem Einlass (14) verbundenes Filterelement (22) zur Reinigung des zugeführten Hydrauliköls, einen Auslass (24) zur Bereitstellung des gereinigten Hydrauliköls über eine mit dem Auslass (24) unmittelbar verbundene erste Versorgungsleitung (26) zum Betrieb einer ersten hydraulischen Verbrauchergruppe (28), sowie ein mit dem Einlass (14) verbundenes Druckbegrenzungsventil (30), das ausgangsseitig unmittelbar mit einer zweiten Versorgungsleitung (32) zum Betrieb einer zweiten hydraulischen Verbrauchergruppe (34) verbunden ist, wobei die beiden Versorgungsleitungen (26, 32) über ein Drosselelement (36) miteinander kommunizieren.

2. Filteranordnung nach Anspruch 1, **dadurch gekennzeichnet, dass** das Drosselelement (36) zugleich ein weiteres Filterelement bildet.

3. Filteranordnung nach Anspruch 1 oder 2, **dadurch gekennzeichnet, dass** das Drosselelement (36) zumindest zweigeteilt aufgebaut ist, wobei ein Mittenabgriff (54) in eine weitere Versorgungsleitung (56) zum Betrieb einer weiteren hydraulischen Verbrauchergruppe (60) mündet.

4. Filteranordnung nach wenigstens einem der vorhergehenden Ansprüche, **dadurch gekennzeichnet, dass** das Druckbegrenzungsventil (30) direktgesteuert ausgebildet ist.

5. Filteranordnung nach wenigstens einem der vorhergehenden Ansprüche, **dadurch gekennzeichnet, dass** dem Auslass (24) das aus dem Filterelement (22) austretende gereinigte Hydrauliköl über ein Einwegventil (40) zugeführt wird.

6. Filteranordnung nach wenigstens einem der vorhergehenden Ansprüche, **gekennzeichnet durch** eine bauliche Integration in einen Filterkopf (46) mit einem abnehmbaren Filtergehäuse (48) zur Aufnahme des als austauschbarer Filtereinsatz (38) ausgebildeten Filterelements (22).
